# EUROPÄISCHE PATENTSCHRIFT

(11) **EP 1 149 662 B1**
(45) Veröffentlichungstag und Bekanntmachung des Hinweises auf die Patenterteilung: **17.09.2003**
(21) Anmeldenummer: 01108282.3
(22) Anmeldetag: 02.04.2001
(51) Int. Cl.: B23P 6/00, B23P 19/04

(54) **Verfahren und Vorrichtung zur Demontage einer Turbinenschaufel**
Method and Apparatus for disassembling a turbine blade
Procédé et dispositif de démontage d'une aube de turbine

(30) Priorität: 25.04.2000 DE 10020229
(43) Veröffentlichungstag der Anmeldung: 31.10.2001
(73) Patentinhaber: ALSTOM (Switzerland) Ltd, 5401 Baden (CH)
(72) Erfinder: Hohmann, Siegfried, 79761 Waldshut (DE)
(74) Vertreter: Pöpper, Evamaria, Dr.

(56) Entgegenhaltungen:
- EP-A- 0 013 772
- SU-A- 1 611 682
- US-A- 4 141 124
- US-A- 4 455 730
- US-A- 5 560 841

## Beschreibung

### TECHNISCHES GEBIET

Bei der Erfindung handelt es sich um ein Verfahren zur Demontage einer Turbinenschaufel gemäss dem Oberbegriff des Anspruchs 1. Die Erfindung bezieht sich weiter auf eine Vorrichtung zur Anwendung des Verfahrens.

### STAND DER TECHNIK

Bei der Demontage von Turbinenschaufeln, welche in einer Nut am Rotor oder am Stator der thermischen Turbomaschine angeordnet sind, ist es aus dem Stand der Technik bekannt, diese mittels eines sogenannten Austreibers zu demontieren. Dieser Austreiber, welcher in der Regel pneumatisch betrieben und auch als Pneumatikhammer bezeichnet wird, greift an der Fussplatte im Bereich des Profilaustritts der Rückseite der Turbinenschaufel an, um diese aus der axialen Nut auszutreiben.

Diese Art der Demontage hat aber verschiedene Nachteile. Da zwischen zwei Laufschaufelreihen beispielsweise einer Gasturbine nur sehr wenig Platz ist, kann das Austreibwerkzeug nur unter einem zur Austreibrichtung ungünstigem Winkel an der Fussplatte angesetzt werden. Dies hat zur Folge, dass sich die Demontage entsprechend zeitaufwendig und schwierig gestaltet, da die Kraftkomponente, welche den Schaufelfuss aus der Nut austreibt, sehr klein ist. Durch Ablagerungen zwischen der axialen Nut und dem Schaufelfuss herrscht zwischen den beiden Teilen ein grosser Reibungskoeffizient, was den Ausbau der Turbinenschaufel zusätzlich erschwert. In Folge des ungünstigen Angriffspunkts der Krafteinleitung wird ein Kippmoment am Schaufelfuss erzeugt, welches den Ausbau der Turbinenschaufel sehr erschwert bzw. sogar verunmöglicht. Das Austreibwerkzeug kann auch eine evtl. vorhandene Schutzschicht, welche an der Oberfläche der Turbinenschaufel aufgebracht ist, beschädigen, obwohl das Werkzeug an der Schaufelkontaktstelle mit einem Nylonüberzug ausgestattet ist, mit welchem versucht, derartige Beschädigungen zu vermeiden.

Ein Verfahren zur Demontage von Leitschaufeln einer thermischen Turbomaschine ist aus US-4455730-A bekannt.

### DARSTELLUNG DER ERFINDUNG

Es ist Ziel dieser Erfindung, die genannten Nachteile zu vermeiden. Die Erfindung löst die Aufgabe, eine Vorrichtung und ein Verfahren zu schaffen, welche(s) den Ausbau einer Turbinenschaufel vereinfacht ermöglicht. Momente an der Turbinenschaufel sollen während der Demontage vermieden oder auf ein Minimum reduziert werden. Eine evtl. vorhandene Schutzschicht soll während der Demontage nicht beschädigt werden.

Erfindungsgemäss wird dies bei einem Verfahren gemäss dem Oberbegriff des Anspruchs 1 dadurch erreicht,
- dass die Turbinenschaufel mittels eines durch einen hydraulisch Zylinder angetriebenen Kolbens durch die in axiale Richtung wirkende Zugkraft herausgezogen wird,
- dass Stützen neben dem Schaufelfuss der Turbinenschaufel am Rotor oder Stator vorhanden sind, auf welche sich der hydraulische Zylinder abstützt, so dass der hydraulische Zylinder die in axiale Richtung wirkende Zugkraft auf den Kolben überträgt, und
- ein Hakenschieber in einen Spalt, welcher sich zwischen der Schaufelgrundfläche und dem Nutgrund befindet, eingeführt wird, dort mittels mindestens eines Hakens, welcher sich in mindestens einer Aussparung, die sich an der Schaufelgrundfläche befindet, am Schaufelfuss verankert und die Turbinenschaufel mittels des Hakenschiebers und dem daran befestigten Kolben herausgezogen wird.

Vorteilhaft wird die Kraft ganz in axiale Richtung erzeugt, was ein zum Verkanten führendes Moment nahezu eliminiert. Zudem wird auf diese Art und Weise die Demontagezeit der Turbinenschaufeln deutlich verringert.

Als Aussparung kann vorteilhaft eine existierende Kühlluftbohrung der Turbinenschaufel verwendet werden.

Ein Stützschieber dient vorteilhaft zusätzlich als Positionssicherung des Hakenschiebers während der Demontage. Die Turbinenschaufel kann mittels des Hakenschiebers durch eine Vorrichtung, welche hydraulisch betrieben wird und sich auf Stützen neben Hakenschieber und der axialen Nut am Rotor oder Stator abstützt, herausgezogen werden.

Das erfindungsgemässe Verfahren eignet sich insbesondere für die Demontage von Leit- oder Laufschaufeln bei Gasturbinen, Dampfturbinen oder Kompressoren.

Die Erfindung bezieht sich auch auf eine Vorrichtung zur Anwendung des Demontageverfahrens gemäss dem Oberbegriff des Anspruchs 8. Die Vorrichtung ist dadurch gekennzeichnet, dass die Demontagevorrichtung aus einem hydraulisch betriebenen Kolben besteht, welcher eine in axiale Richtung wirkende Zugkraft erzeugt, die auf den Schaufelfuss der Turbinenschaufel so übertragbar ist, dass eine Demontage der Turbinenschaufel möglich ist und neben dem Schaufelfuss am Rotor oder Stator zusätzlich Mittel vorhanden sind, welche mit dem hydraulisch angetriebenen Kolben so verbunden sind, dass sie während der Demontage der Turbinenschaufel eine Abstützung gegenüber der von dem Kolben erzeugten Zugkraft erlauben, wobei der hydraulisch betriebene Kolben während der Demontage der Turbinenschaufel mit einem Hakenschieber verbunden ist, welcher am Schaufelgrund des Schaufelfusses mittels mindestens eines Hakens an einer Aussparung arretiert ist, und wobei sich der Hakenschieber in einem Spalt zwischen dem Schaufelgrund und dem Nutgrund befindet.

### KURZE BESCHREIBUNG DER ZEICHNUNG

Es zeigen:
- **Fig. 1**: einen Schnitt durch den Schaufelfuss einer Turbinenschaufel mit einer erfindungsgemässen Demontagevorrichtung,
- **Fig. 2**: einen Schnitt durch eine Turbinenschaufel gemäss der Linie II-II in der Figur 1,
- **Fig. 3**: eine Ansicht einer erfindungsgemässe Demontagevorrichtung von oben und
- **Fig. 4**: einen Schnitt gemäss der Linie IV-IV in der Figur 3.

Es werden nur die für die Erfindung wesentlichen Elemente dargestellt. Gleiche Elemente werden in unterschiedlichen Zeichnungen mit gleichen Bezugszeichen versehen.

### WEG ZUR AUSFÜHRUNG DER ERFINDUNG

Die Erfindung bezieht sich auf ein Verfahren und auf eine Vorrichtung zur Demontage einer Turbinenschaufel 1 aus einer axial angeordneten Nut 3 eines Rotors 8 oder eines Stators einer thermischen Turbomaschine. Es kann sich bei der Turbinenschaufel 1 beispielsweise um eine Leit- oder um eine Laufschaufel einer Gasturbine, einer Dampfturbine oder eines Kompressors handeln.

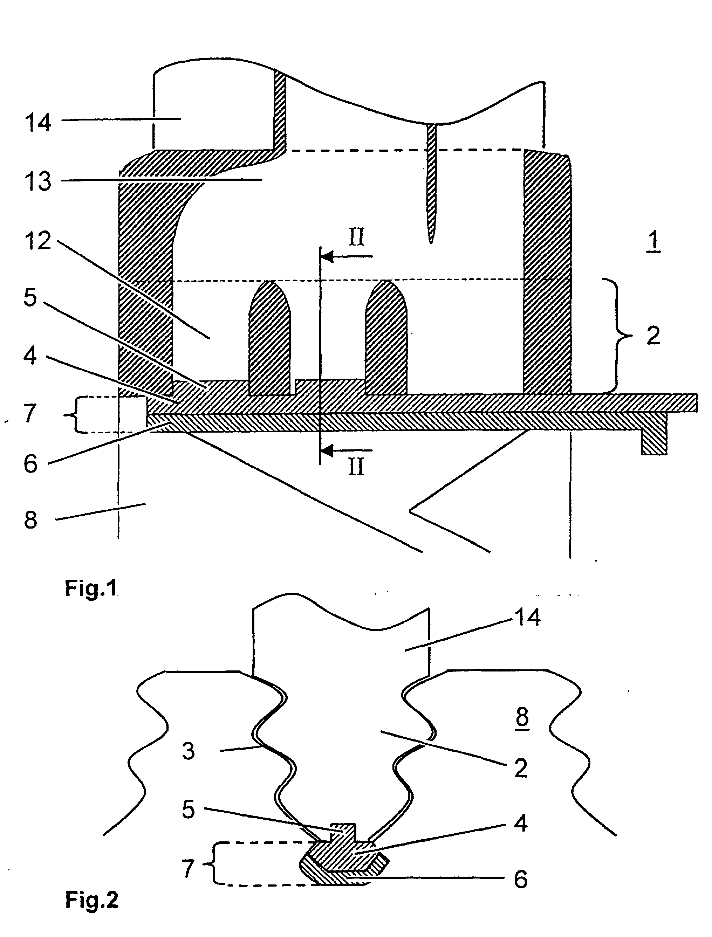

Die Figur 1 zeigt einen Schnitt durch den Schaufelfuss 2 einer solchen Turbinenschaufel 1. Die Turbinenschaufel 1 ist im Innern mit einem Kühlsystem 13 ausgestattet, welches Kühlluft während des Betriebes der thermischen Turbomaschine aufnimmt. Die Kühlluft gelangt durch Kühlungslüftungslöcher 12, welche sich an der Schaufelgrundfläche befinden, in das Kühlsystem 13. Dies ist aber allgemein aus dem Stand der Technik bekannt und in den Figuren nicht weiter dargestellt.

Die Demontage der Turbinenschaufel 1 aus der axialen Nut, wie es in der Figur 1 dargestellt ist, geschieht Mittels zweier Schieber, einem Hakenschieber 4 und einem Stützschieber 6. Der Hakenschieber 4 wird in einen Spalt 7, welcher sich zwischen der Schaufelgrundfläche und dem Nutgrund befindet, eingeführt. Haken 5, welche sich an dem Hakenschieber 4 befinden, greifen dann in die Kühlungsluftlöcher 12 oder in andere sich am Schaufelgrund befindende Aussparungen ein. Als weiterer Verfahrensschritt wird der Stützschieber 6 unter den Hakenschieber 4 eingeführt. Dieser Stützschieber 6 schliesst sich formschlüssig an den Hakenschieber 4 an und stellt während der Demontage der Turbinenschaufel 1 die Positionssicherung des Hakenschiebers 4 sicher.

Die Figur 2 zeigt einen korrespondierenden Schnitt durch den Schaufelfuss 2 einer Turbinenschaufel 1 gemäss der Linie II-II in der Figur 1. Dort sind sowohl beide Schieber, der Hakenschieber 4 und der sich darunter formschlüssig anschliessende Stützschieber 6 als auch die Haken 5 sichtbar. Beide befinden sich im Spalt 7 unterhalb des Schaufelfusses 2 zwischen der Schaufelgrundfläche der Turbinenschaufel 1 und dem Nutgrund der axialen Nut 3.

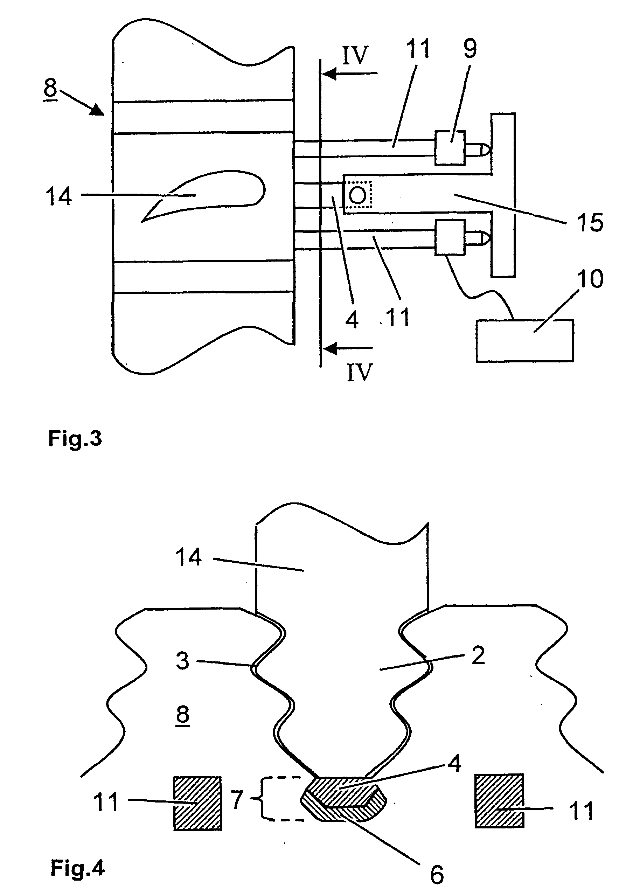

Zur Demontage der Turbinenschaufel 1 wird, wie dies in den Figuren 3 und 4 sichtbar ist, der Hakenschieber 4 mit einem Kolben 15 verbunden. Sollten Möglichkeiten vorhanden sein, könnte dieser Kolben 15 auch direkt an die Turbinenschaufel 1 angreifen. Über einen hydraulischen Zylinder 9, welcher mit einer Hydraulikpumpe 10 angetrieben wird, wird die Turbinenschaufel 1 aus der axialen Nut 3 herausgezogen. Dabei wirkt an der Turbinenschaufel 1 eine in axiale Richtung angreifende Zugkraft. Damit diese Zugkraft auf den Schaufelfuss 2 der Turbinenschaufel 1 wirken kann, stützt sich der hydraulische Zylinder 9 auf zwei Stützen 11 ab, welche am Rotor 8 neben dem Hakenschieber 4 angreifen. Die Figur 4, welche einen Schnitt durch die Demontagevorrichtung gemäss der Linie IV-IV in der Figur 3 zeigt, offenbart die Anordnung der beiden Stützen 11 am Rotor 8 neben der axialen Nut 3. Durch die Anwendung des hydraulischen Zylinders 9 können sehr grosse Kräfte erzeugt und auf die Turbinenschaufel 1 übertragen werden.

Die erfindungsgemässe Demontage der Turbinenschaufel 1, wie sie in der vorliegenden Beschreibung offenbart ist, hat gegenüber dem Stand der Technik verschiedene Vorteile. Da eine axiale Zugkraft auf den Schaufelfuss 2 wirkt, werden störende Momente, die ein Kippen des Schaufelfusses bewirken, nahezu verhindert. Dies liegt insbesondere daran, dass die Wirklinie der angreifenden Zugkraft bei der erfindungsgemässen Demontage einer Sollwirklinie wesentlich näher ist als bei den bisher aus dem Stand der Technik bekannten Verfahren. Die Demontagezeit verringert sich mit dem vorgeschlagenen Verfahren aufgrund dieser Tatsachen erheblich.

### BEZUGSZEICHENLISTE

- 1: Turbinenschaufel
- 2: Schaufelfuss
- 3: Nut
- 4: Hakenschieber
- 5: Haken
- 6: Stützschieber
- 7: Spalt
- 8: Rotor
- 9: Hydraulischer Zylinder
- 10: Hydraulikpumpe
- 11: Stütze
- 12: Kühllungslüftungsloch
- 13: Kühlsystem
- 14: Schaufelblatt
- 15: Kolben

## Patentansprüche

1. Verfahren zur Demontage einer Turbinenschaufel (1), welche in einer axial ausgerichteten Nut (3) eines Rotors (8) oder Stators einer Turbomaschine mittels eines Schaufelfusses (2) befestigt ist,
**dadurch gekennzeichnet,**
- **dass** die Turbinenschaufel (1) mittels eines durch einen hydraulisch Zylinder (9) angetriebenen Kolbens (15) durch die in axiale Richtung wirkende Zugkraft herausgezogen wird,
- **dass** Stützen (11) neben dem Schaufelfuss (2) der Turbinenschaufel (1) am Rotor (8) oder Stator vorhanden sind, auf welche sich der hydraulische Zylinder (9) abstützt, so dass der hydraulische Zylinder (9) die in axiale Richtung wirkende Zugkraft auf den Kolben (15) überträgt, und
- ein Hakenschieber (4) in einen Spalt (7), welcher sich zwischen der Schaufelgrundfläche und dem Nutgrund befindet, eingeführt wird, dort mittels mindestens eines Hakens (5), welcher sich in mindestens einer Aussparung (12), die sich an der Schaufelgrundfläche befindet, am Schaufelfuss (2) verankert und die Turbinenschaufel (1) mittels des Hakenschiebers (4) und dem daran befestigten Kolben (15) herausgezogen wird.

2. Demontageverfahren nach Anspruch 1,
**dadurch gekennzeichnet, dass**
unter dem Hakenschieber (4) ein Stützschieber (6) eingeführt wird, bevor die Turbinenschaufel (1) mittels des Hakenschiebers (4) demontiert wird.

3. Demontageverfahren nach Anspruch 2,
**dadurch gekennzeichnet, dass**
sich der mindestens eine Haken (5) des Hakenschiebers (4) in mindestens ein Kühllüftungsloch (12), welches sich in Form einer Aussparung (12) an der Schaufelgrundfläche befindet, verankert.

4. Demontageverfahren nach einem der vorangehenden Ansprüche,
**dadurch gekennzeichnet, dass**
es sich bei der Turbinenschaufel (1) um eine Leit- oder Laufschaufet einer Gasturbine, einer Dampfturbine oder eines Kompressors handelt.

5. Demontagevorrichtung zur Durchführung des Montageverfahren gemäss einem der Ansprüche 1 bis 4,
**dadurch gekennzeichnet, dass**
- die Demontagevorrichtung aus einem hydraulisch betriebenen Kolben (15) besteht, mit welchem eine in axiale Richtung wirkende Zugkraft erzeugbar ist, die auf den Schaufelfuss (2) der Turbinenschaufel (1) so übertragbar ist, dass eine Demontage der Turbinenschaufet (1) möglich ist und
- zusätzlich Stützen (11) vorhanden sind, welche mit dem hydraulisch angetriebenen Kolben (15) so verbunden sind, dass sie während der Demontage der Turbinenschaufel (1) eine Abstützung gegenüber der auf den Kolben (15) wirkenden Zugkraft erlauben,
- wobei der hydraulisch betriebene Kolben (15) während der Demontage der Turbinenschaufel (1) mit einem Hakenschieber (4) verbunden ist, welcher am Schaufelgrund des Schaufelfusses (2) mittels mindestens eines Hakens (5) an einer Aussparung (12) arretiert ist, und
- wobei sich der Hakenschieber (4) in einem Spalt (7) zwischen dem Schaufelgrund und dem Nutgrund befindet.

6. Demontagevorrichtung nach Anspruch 5,
**dadurch gekennzeichnet, dass**
während der Demontage der Turbinenschaufel (1) unter dem Hakenschieber (4) ein Stützschieber (6) angeordnet ist.

## Claims

1. Method for demounting a turbine blade (1) which is fastened in an axially oriented groove (3) of a rotor (8) or stator of a turbomachine by means of a blade root (2), **characterized in that**
- the turbine blade (1) is drawn out, as a result of the tensile force acting in the axial direction, by means of a piston (15) which is driven by a hydraulic cylinder (9),
- next to the blade root (2) of the turbine blade (1), on the rotor (8) or stator, supports (11) are present, on which the hydraulic cylinder (9) is. supported, so that the hydraulic cylinder (9) transmits to the piston (15) the tensile force acting in the axial direction, and
- a hooked slide (4) is introduced into a gap (7) located between the blade base and the groove bottom and is anchored to the blade root (2) there by means of at least one hook (5) which is located in at least one clearance (12) located at the blade base, and the turbine blade (1) is drawn out by means of the hooked slide (4) and the piston (15) fastened to the latter.

2. Demounting method according to Claim 1, **characterized in that** a supporting slide (6) is introduced under the hooked slide (4) before the turbine blade (1) is demounted by means of the hooked slide (4).

3. Demounting method according to Claim 2, **characterized in that** the at least one hook (5) of the hooked slide (4) is anchored in at least one cooling ventilation hole (12) which is located in the form of a clearance (12) at the blade base.

4. Demounting method according to one of the preceding claims, **characterized in that** the turbine blade (1) is a guide vane or moving blade of a gas turbine, steam turbine or compressor.

5. Demounting device for carrying out the demounting method according to one of Claims 1 to 4, **characterized in that**
- the demounting device consists of a hydraulically operated piston (15), by means of which a tensile force acting in the axial direction can be generated, which can . be transmitted to the blade root (2) of the turbine blade (1) in such a way that it is possible to demount the turbine blade (1), and,
- in addition, supports (11) are present, which are connected to the hydraulically operated piston (15) in such a way that, during the demounting of the turbine blade (1), they allow support with respect to the tensile force acting on the piston (15),
- during the demounting of the turbine blade (1), the hydraulically operated piston (15) being connected to a hooked slide (4) which is detained at the blade base of the blade root (2) by means of at least one hook (5) at a clearance (12), and
- the hooked slide (4) being located in a gap (7) between the blade base and the groove bottom.

6. Demounting device according to Claim 5, **characterized in that**, during the demounting of the turbine blade (1), a supporting slide (6) is arranged below the hooked slide (4).

## Revendications

1. Procédé de démontage d'une aube de turbine (1), laquelle est fixée dans une encoche (3) orientée axialement d'un rotor (8) ou d'un stator d'une turbomachine, au moyen d'une base d'aube (2),
**caractérisé en ce que**
- l'aube de turbine (1) est ressortie au -moyen d'un piston (15) entraînée par un vérin hydraulique (9) par la force de traction agissant dans la direction axiale,
- des supports (11) sont prévus à côté de la base de l'aube (2) de l'aube de turbine (1) sur le rotor (8) ou le stator, sur lesquels s'appuie le vérin hydraulique (9), de sorte que le vérin hydraulique (9) transmette au piston (15) la force de traction agissant dans la direction axiale, et
- un tiroir à crochet (4) est introduit dans une fente (7) qui se trouve entre la surface de fond de l'aube et le fond de l'encoche, à cet endroit, au moyen d'au moins un crochet (5) qui est ancré dans la base de l'aube (2) dans au moins un évidement (12) qui se trouve sur la surface de base de l'aube, l'aube de turbine (1) est retirée au moyen du tiroir à crochet (4) et du piston (15) qui lui est fixé.

2. Procédé de démontage selon la revendication 1,
**caractérisé en ce que**
l'on introduit sous le tiroir à crochet (4) un tiroir de support (6) avant que l'aube de turbine (1) ne soit démontée au moyen du tiroir à crochet (4) .

3. Procédé de démontage selon la revendication 2,
**caractérisé en ce que**
l'au moins un crochet (5) du tiroir à crochet (4) est ancré dans au moins un trou de ventilation d'air froid (12), qui se trouve sous la forme d'un évidement (12) sur la surface de fond de l'aube.

4. Procédé de démontage selon l'une quelconque des revendications précédentes,
**caractérisé en ce que**
l'aube de turbine (1) est une aube directrice ou une aube mobile d'une turbine à gaz, d'une turbine à vapeur ou d'un compresseur.

5. Dispositif de démontage pour la mise en oeuvre du procédé de démontage selon l'une quelconque des revendications 1 à 4,
**caractérisé en ce que**
- le dispositif de démontage se compose d'un piston (15) à entraînement hydraulique, avec lequel on peut produire une force de traction agissant dans la direction axiale, laquelle peut être transmise à la base de l'aube (2) de l'aube de turbine (1) de telle sorte qu'un démontage de l'aube de turbine (1) soit possible et
- des supports (11) sont en outre prévus, lesquels sont raccordés au piston (15) à entraînement hydraulique de telle sorte qu'ils permettent, pendant le démontage de l'aube de turbine (1) un support par rapport à la force de traction agissant sur le piston (15),
- le piston (15) à entraînement hydraulique étant raccordé pendant le démontage de l'aube de turbine (1) à un tiroir à crochet (4) qui est bloqué sur le fond de l'aube de la base de l'aube (2) au moyen d'au moins un crochet (5) sur un évidement (12), et
- le tiroir à crochet (4) se trouvant dans une fente (7) entre le fond de l'aube et le fond de l'encoche.

6. Dispositif de démontage selon la revendication 5,
**caractérisé en ce que**
pendant le démontage de l'aube de turbine (1) un tiroir de support (6) est disposé sous le tiroir à crochet (4).
